# FASCICULE DE BREVET EUROPEEN

(11) **EP 3 559 592 B1**
(45) Date de publication et mention de la délivrance du brevet: **17.11.2021**
(21) Numéro de dépôt: 17837970.7
(22) Date de dépôt: 20.12.2017
(51) Int. Cl.: G01B 11/00, G01B 11/24, G01F 23/292

(54) **SYSTÈME ET DISPOSITIF DE DÉTERMINATION DE LA VALEUR D'UN PARAMÈTRE DE DÉFORMATION LOCALE D'UNE CUVE DE STOCKAGE DE LIQUIDE ET UTILISATION DUDIT DISPOSITIF**
SYSTEM UND VORRICHTUNG ZUR BESTIMMUNG DES WERTES EINES LOKALEN VERFORMUNGSPARAMETERS EINES FLÜSSIGKEITSTANKS UND VERWENDUNG DER VORRICHTUNG
SYSTEM AND DEVICE FOR DETERMINING THE VALUE OF A LOCAL DEFORMATION PARAMETER OF A LIQUID STORAGE TANK AND USE OF SAID DEVICE

(30) Priorité: 22.12.2016 FR 1663142
(43) Date de publication de la demande: 30.10.2019
(73) Titulaire: Engie, 92400 Courbevoie (FR)
(72) Inventeur: ZELLOUF, Yacine, 92400 Courbevoie (FR); GORINTIN, Louis, 92120 Montrouge (FR); GUILLET, Julien, 75012 Paris (FR)
(74) Mandataire: Cornuejols, Georges
(86) Numéro de dépôt international: PCT/FR2017/053733
(87) Numéro de publication internationale: WO 2018/115741

(56) Documents cités:
- DE-A1- 4 339 441
- DE-A1-102015 204 675
- DE-U1-202013 100 833
- US-A1- 2008 297 403
- US-A1- 2015 020 604

## Description

### DOMAINE TECHNIQUE DE L'INVENTION

La présente invention vise un système de détermination de la valeur d'au moins un paramètre d'une cuve de stockage de liquide, un dispositif pour former un tel système et une utilisation dudit dispositif. Elle s'applique, notamment, au domaine du transport et de stockage de gaz naturel liquéfié et plus particulièrement aux domaines de :
- la mesure de volume de gaz naturel liquéfié dans une cuve,
- la modélisation de phénomènes dynamiques de mouvement de gaz naturel liquéfié dans la cuve et
- la mesure d'intégrité de cuves de gaz naturel liquéfié.

### ÉTAT DE LA TECHNIQUE

Dans le domaine de la mesure de volume et de la facturation du gaz naturel liquéfié (également abrévié « GNL »), on connaît la méthodologie de calcul de transfert d'énergie entre deux réservoirs de GNL préconisée dans l'ouvrage « Custody Transfer Handbook » du GIIGNL (pour « Groupe international des importateurs de gaz naturel liquéfié »). Par « réservoir », on entend un réservoir d'usine, de navire, de structure flottante de type FLNG (pour « Floating Liquified Natural Gas », traduit par « à gaz naturel liquéfié flottante »), FSRU (pour « Floating Storage Regasification Unit », traduit par « unité flottante de stockage et de regazéification »), FSU (pour « Floating Storage Unit », traduit par « unité flottante de stockage ») ou SRV (pour « Shuttle and Regasification Vessel », traduit par « vaisseau navette d'avitaillement en gaz »), ou de terminal méthanier.

Par « transfert entre deux réservoirs », on entend le déplacement du GNL entre deux réservoirs parmi ceux indiqués ci-dessus.

Dans le domaine de la modélisation de phénomènes dynamiques de ballottement, c'est-à-dire du mouvement de liquide dans un réservoir, des expériences connues d'observation du ballottement ont recouru à des capteurs de choc intégrés dans les parois des cuves. Ces capteurs de chocs présentent l'inconvénient de nécessiter une intégration dans les parois des cuves dès leur fabrication.

Dans le domaine de la mesure d'intégrité des cuves de GNL, des méthodes connues de mesure de vieillissement des cuves sont utilisées lorsque la cuve est vide (arrêts techniques) : inspection visuelle, appareils portatifs de mesure d'intégrité (par la mesure de diverses grandeurs physiques). Ces méthodes présentent l'inconvénient de ne pouvoir être utilisées que lors des arrêts techniques qui interviennent, par exemple, tous les quatre ans pour des navires méthaniers. Entre deux arrêts techniques, il n'existe aujourd'hui aucun moyen d'inspection qui permette de détecter un vieillissement prématuré de réservoirs ou d'anticiper d'urgence un arrêt technique.

Dans le domaine de la mesure de volume dans un réservoir, on utilise actuellement une méthodologie de calcul dans laquelle on lit la hauteur du GNL dans le réservoir avant et après le transfert pour en déduire le volume de GNL transféré. Cette méthodologie est actuellement utilisée uniquement pour lire le volume de GNL dans le réservoir d'un navire qui reçoit du GNL ou qui en délivre et n'est utilisée ni dans les terminaux méthaniers ni dans les structures flottantes.

Cette lecture est corrigée par des tables pour prendre en compte la déformation des cuves occasionnée par le liquide dans le réservoir.

DE 43 39 441 A1 décrit un système de détermination du volume d'un liquide dans une cuve comprenant un scanner laser permettant de mesurer la topographie de la surface du liquide et des moyens de détermination du volume de liquide à partir des valeurs de topographie mesurées.

Toutefois, dans le cas de transferts offshore, le réservoir de GNL est sujet au phénomène de ballottement qui rend la lecture de la hauteur de GNL, dans le réservoir, imprécise ou impossible.

Afin de pallier ce problème, l'industrie du GNL développe des méthodes alternatives pour évaluer en ligne l'énergie transférée. Dans ces méthodes, un débitmètre dynamique est par exemple positionné à l'intérieur d'une conduite de transfert de GNL reliant les deux réservoirs. Cette méthode permet de mesurer le débit massique du GNL transféré permettant ainsi de s'affranchir d'une lecture statique de la hauteur du GNL dans les cuves. Toutefois, cette technologie est admise jusqu'à des débits ne dépassant pas 1000 m³/h là où les transferts de GNL peuvent atteindre 10 000 m³/h. Pour atteindre cette valeur, il faut multiplier le nombre de débitmètres.

Ces débitmètres présentent un inconvénient majeur : ils nécessitent un écoulement établi pour fonctionner dans les meilleures conditions, ce qui implique des longueurs de canalisations très importantes en amont et en aval du débitmètre.

À ce jour, aucun projet offshore n'a retenu cette solution.

Ces problèmes se posent également dans le domaine plus général du transport de fluide dans une cuve subissant un ballottement.

### OBJET DE L'INVENTION

La présente invention, qui est définie par les revendications ci-jointes, vise à remédier à tout ou partie de ces inconvénients.

À cet effet, selon un premier aspect décrit dans la revendication 8, la présente invention vise un système de détermination de la valeur d'au moins un paramètre de déformation locale d'une cuve de stockage d'un liquide qui comporte :
- une cuve de stockage du liquide et
- un dispositif amovible de détermination de la valeur d'au moins un paramètre d'une cuve du liquide, qui comporte :
   - un moyen de fixation à l'intérieur de la cuve, par exemple à un mât positionné à l'intérieur de la cuve et à proximité d'une paroi supérieure de ladite cuve, ledit moyen de fixation supportant :
      - un émetteur laser multidirectionnel,
      - un récepteur de la lumière émise par le laser,
      - un photodétecteur transformant la lumière reçue en signal électrique et
   - un moyen de détection d'un relief à l'intérieur de la cuve en fonction de signaux transformés par le photodétecteur,
   - un moyen de détermination d'une topographie d'au moins une paroi de la cuve en fonction d'au moins un relief détecté et
   - un moyen de détermination de la valeur de chaque paramètre de déformation locale en fonction de la topographie déterminée.

Ces dispositions permettent de réaliser une évaluation des contraintes mécaniques auxquelles les cuves sont soumises.

Lorsque la topographie de la surface du liquide est déterminée, le dispositif permet de déterminer le volume du liquide présent dans la cuve et lorsque la topographie d'une paroi de la cuve est déterminée, le dispositif permet de déterminer la déformation des cuves, notamment.

De plus, un seul dispositif peut couvrir une cuve entière et ce système peut capter des phénomènes dynamiques inaccessibles avec les technologies actuelles, du fait d'une grande résolution spatiale.

Dans des modes de réalisation, le système objet de la présente invention est configuré pour déterminer un paramètre de déformation de la cuve représentatif d'une cavité dans une paroi.

Dans des modes de réalisation, le système objet de la présente invention est configuré pour déterminer un paramètre de déformation de la cuve représentatif d'une cavité dont la dimension maximale, selon un axe, est inférieure à un mètre.

Dans des modes de réalisation, le système objet de la présente invention est configuré pour déterminer un paramètre de déformation de la cuve représentatif d'une cavité dont la dimension maximale, selon un axe, est inférieure à dix centimètres.

Dans des modes de réalisation, le système objet de la présente invention est configuré pour déterminer un paramètre de déformation de la cuve représentatif d'une cavité dont la dimension maximale, selon un axe, est inférieure à un centimètre.

Dans des modes de réalisation, le système objet de la présente invention comporte :
- un compteur d'un nombre de déformations critiques dans la cuve déterminées par le moyen de détermination, ce compteur étant configuré pour compter la présence d'une déformation critique lorsqu'une valeur de déformation mesurée est supérieure à une valeur limite prédéterminée et
- un émetteur d'alarme lorsqu'un nombre de déformations critiques compté est supérieur à un nombre déterminé.

Dans des modes de réalisation, le moyen de détermination d'une topographie est également configuré pour déterminer la topographie d'une surface de liquide présent dans la cuve, le moyen de détermination déterminant une valeur représentative d'un volume de liquide dans la cuve en fonction de la topographie déterminée.

Ces modes de réalisation permettent de déterminer le volume de liquide présent dans la cuve de manière fiable indépendamment du phénomène de ballottement de la cuve.

Dans des modes de réalisation, le système objet de la présente invention comporte un moyen de calcul d'une propriété mécanique de la cuve en fonction de la topographie déterminée.

Ces modes de réalisation permettent de déterminer l'état d'usure de la cuve. Dans des modes de réalisation, au moins :
- l'émetteur,
- le récepteur et
- le photodétecteur,
sont embarqués dans un boîtier étanche et/ou à masse de remplissage configuré pour limiter les risques d'explosions.

Ces modes de réalisation permettent de mettre en œuvre le système dans une cuve dans un environnement ATEX (pour « Atmosphère explosive ») tel que défini dans la norme ATEX 95 de l'Union Européenne, dans une norme équivalente ou dans un environnement où des mouvements de liquide sont susceptibles d'endommager le dispositif.

Dans des modes de réalisation, le système objet de la présente invention comporte :
- un boîtier d'isolation thermique d'au moins :
   - l'émetteur,
   - le récepteur et
   - le photodétecteur et
- un moyen de chauffage de l'intérieur du boîtier à une température correspondant à la température minimale de fonctionnement de l'émetteur, du récepteur et du photodétecteur.

Ces modes de réalisation permettent une utilisation du système dans une cuve cryogénique.

Dans des modes de réalisation, le système objet de la présente invention comporte au moins un capteur supplémentaire d'une valeur de paramètre interne ou externe de la cuve, la valeur du paramètre déterminé par le système étant déterminée en fonction d'au moins une valeur de paramètre supplémentaire captée.

Ce capteur est, par exemple, un inclinomètre, un gyroscope, un accéléromètre, un manomètre, un thermomètre. Ce capteur est positionné dans la ou sur la cuve ou sur un navire transportant la cuve.

Ces modes de réalisation permettent de renforcer la fiabilité de la détermination réalisée.

Selon un deuxième aspect décrit dans la revendication 1, la présente invention vise un dispositif amovible de détermination de la valeur d'au moins un paramètre de déformation locale d'une cuve de stockage de liquide, tel un ballottement du liquide dans la cuve, un volume de liquide présent dans la cuve ou une déformation de la cuve par exemple, pour former un système objet de la présente invention qui comporte :
- un dispositif amovible de détermination de la valeur d'au moins un paramètre d'une cuve de stockage du liquide, qui comporte :
   - un moyen de fixation à l'intérieur de la cuve, par exemple à un mât positionné à l'intérieur de la cuve et à proximité d'une paroi supérieure de ladite cuve, ledit moyen de fixation supportant :
      - un émetteur laser multidirectionnel,
      - un récepteur de la lumière émise par le laser,
      - un photodétecteur transformant la lumière reçue en signal électrique et
- un moyen de détection d'un relief à l'intérieur de la cuve en fonction de signaux transformés par le photodétecteur,
- un moyen de détermination d'une topographie d'au moins une paroi de la cuve en fonction d'au moins un relief détecté et
- un moyen de détermination de la valeur de chaque paramètre de déformation locale en fonction de la topographie déterminée.

Les buts, avantages et caractéristiques particulières du dispositif objet de la présente invention étant similaires à ceux du système objet de la présente invention, ils ne sont pas rappelés ici.

Ce dispositif permet également un rétro-équipement des cuves déjà existantes.

Selon un troisième aspect, la présente invention vise une utilisation du dispositif, objet de la présente invention, pour déterminer la valeur d'une propriété mécanique de la cuve.

Les buts, avantages et caractéristiques particulières de l'utilisation objet de la présente invention étant similaires à ceux du dispositif objet de la présente invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du système et du dispositif objets de la présente invention, en regard des dessins annexés, dans lesquels :
- la figure 1 représente, schématiquement, un mode de réalisation particulier du système et du dispositif objets de la présente invention,
- la figure 2 représente, schématiquement, un exemple de topographie d'une surface de liquide en deux dimensions réalisée par le système et le dispositif objets de la présente invention,
- la figure 3 représente, schématiquement, un exemple de topographie d'une paroi de cuve en deux dimensions réalisée par le système et le dispositif objets de la présente invention et
- la figure 4 représente, schématiquement, un exemple de topographie d'une paroi de cuve en deux dimensions réalisée par le système et le dispositif objets de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

On note que la présente invention vise préférentiellement les cuves de stockage de GNL, le terme « liquide » étant alors interprété comme la phase liquide du GNL stocké.

On appelle « déformation locale » une déformation d'une paroi présentant une plus grande dimension au moins un ordre de grandeur inférieure à la plus grande dimension de la cuve. Par exemple, une déformation locale peut être une fissure, une cavité, une bosse, ou autre. On note qu'ici un « ordre de grandeur » est défini comme une puissance de dix.

Cette déformation locale peut également avoir pour synonyme « déformation ponctuelle ».

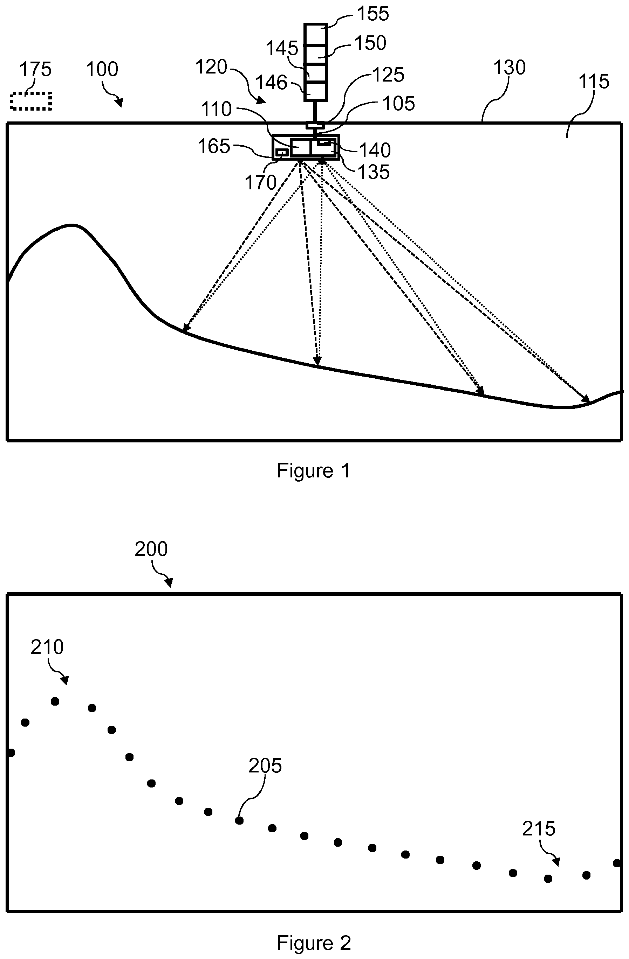

On observe, sur la figure 1, qui n'est pas à l'échelle, une vue schématique d'un mode de réalisation du système 100 objet de la présente invention. Le système 100 de détermination de la valeur d'au moins un paramètre d'une cuve de stockage d'un liquide, telle une déformation de la cuve par exemple, comporte :
- une cuve 115 de stockage de liquide et
   - un moyen 125 de fixation à l'intérieur de la cuve, par exemple à un mât positionné à l'intérieur de la cuve et à proximité d'une paroi 130 supérieure de ladite cuve, ledit moyen de fixation supportant :
      - un émetteur 110 laser multidirectionnel,
      - un récepteur 135 de la lumière émise par le laser,
      - un photodétecteur 140 transformant la lumière reçue en signal électrique et
- un moyen 145 de détection d'un relief à l'intérieur de la cuve en fonction de signaux transformés par le photodétecteur,
- un moyen 146 de détermination d'une topographie d'au moins une paroi de la cuve en fonction d'au moins un relief détecté et
- un moyen 150 de détermination de la valeur de chaque paramètre de déformation locale en fonction de la topographie déterminée.

La cuve 115 est, par exemple, un réservoir d'usine, de navire ou de terminal méthanier. Cette cuve 115 peut ainsi être montée sur un navire dit « méthanier ».

Cette cuve 115 est, par exemple :
- une cuve de méthanier,
- une cuve de gaz naturel liquéfié flottante,
- une cuve d'une unité flottante de stockage et de regazéification,
- une cuve d'une unité flottante de stockage, ou
- une cuve d'un vaisseau navette d'avitaillement en gaz.

La cuve 115 peut être à pression atmosphérique ou pressurisée au-delà de la pression atmosphérique, à au moins un bar au-dessus de la pression atmosphérique par exemple. Dans des variantes, la cuve 115 est une cuve 115 de stockage de GNL et comporte un mât 105 de support.

Le mât 105 de support est, par exemple, un mât tripode dont chaque pied comporte un moyen de fixation 125. Dans des variantes, ce mât 105 comporte un seul pied.

Le moyen de fixation 125 est, par exemple, un pas de vis pour recevoir une vis ou une surface plane pour recevoir un matériau adhésif.

Le mât 105 est positionné dans une partie supérieure de la hauteur dans la cuve 115. Par « hauteur », on entend l'axe défini par la direction de la force de la gravitation terrestre, et de sens inverse à la force de gravitation terrestre, une fois la cuve 115 remplie de GNL. Par exemple, le mât 105 est positionné contre une paroi opposée à la phase liquide du gaz naturel liquéfié contenu dans la cuve 115, cette phase liquide se positionnant, de manière gravitaire, dans une partie inférieure de la cuve 115. Lorsque la cuve 115 est pleine, la phase liquide remplit intégralement la cuve 115. À mesure que la cuve 115 est vidée, la partie supérieure de la cuve est remplie d'une phase gazeuse issue de l'évaporation du GNL surnommée le « boil-off gas » (traduit en français par « gaz d'évaporation »).

La dimension longitudinale du mât 105, qui constitue la hauteur dudit mât 105 une fois positionné dans la cuve 115, est choisie de telle manière que le point le plus bas du dispositif 120 soit positionné au-dessus de la surface du liquide, de préférentiellement à une hauteur de la cuve représentant 98% de la hauteur totale du volume de stockage de la cuve 115. Dans des variantes, l'émetteur 110, le récepteur 135 et le photodétecteur 140 sont positionnés à cette hauteur, indépendamment de la hauteur du mât 105.

L'émetteur 110 est, par exemple, une source laser multidirectionnelle, par le biais d'un système optique à diffraction, d'un jeu de miroirs mobiles ou par l'utilisation d'une source montée mobile en rotation et orientée de telle manière à ce que la source laser puisse balayer l'intégralité de l'intérieur du volume de stockage de la cuve 115 à l'exception d'une infime partie aux alentours du mât 105 et de la partie de la paroi supérieure 130 à laquelle ce mât 105 est fixé.

L'émetteur 110 est préférentiellement une source laser pulsée qui émet des trains d'onde (paquets de lumière) de quelques microsecondes. Ces trains d'ondes prennent différents parcours lumineux au cours desquels ils sont ralentis et orientés sur une matrice. Une lentille permet de distribuer ces impulsions laser dans l'espace.

La lumière utilisée par cet émetteur 110 est, par exemple, dans le domaine infrarouge, à une valeur de longueur d'onde comprise entre 900 nanomètres et 930 nanomètres.

Préférentiellement, cet émetteur 110 est configuré pour présenter une résolution spatiale d'un centimètre lors d'une activation. Une résolution spatiale de l'ordre du centimètre est suffisante pour la détermination d'une déformation locale de la cuve, tandis qu'une résolution spatiale de l'ordre de 10 centimètres est suffisante pour observer le ballottement, pour mesurer le niveau de liquide et pour déterminer une valeur de déformation globale des cuves. Cet émetteur 110 présente également préférentiellement une résolution temporelle d'une seconde. Cette fréquence est adaptée aux constantes de temps typiques du ballottement ou des phénomènes de dilatation des cuves observés.

La puissance d'émission de l'émetteur 110 est choisie pour que la puissance de réception de la lumière émise, réfléchie, à une distance de cent mètres par exemple, puis reçue au niveau du récepteur 135 permette la détection de la lumière par le photodétecteur 140.

Pour mesurer un relief, une mesure par temps de vol de la lumière parcourant la distance de l'émetteur à un point de la surface considérée puis réfléchie jusqu'au récepteur 135 est réalisée. La fenêtre temporelle à laquelle le signal est reçu donne également une indication de la direction, chaque ligne à retard ayant une fenêtre d'émission et de réception définie.

Le récepteur 135 est choisi pour être très sensible pour permettre de détecter les matériaux faiblement réfléchissants.

Le récepteur 135 est, par exemple, un système optique de type collecteur de lumière, par exemple un télescope. Ce récepteur 135 permet de collecter des faisceaux de lumière émis, puis réfléchis de manière diffuse par une surface dans la cuve 115, de manière cohérente pour les transmettre au photodétecteur 140.

Le photodétecteur 140 est un circuit électronique configuré pour émettre un signal électrique représentatif de la détection d'un signal lumineux. Ce photodétecteur 140 est, par exemple, une photodiode.

Ainsi, comme on le comprend :
- l'émetteur 110 émet une pluralité de faisceaux en direction d'une paroi de la cuve 115 ou du liquide stocké dans la cuve 115,
- chaque faisceau est réfléchi par la paroi de la cuve 115 ou par la surface du liquide,
- les faisceaux réfléchis sont reçus par le récepteur 135 puis par le photodétecteur 140,
- en fonction du décalage temporel entre le moment de l'émission d'un faisceau et de la réception du faisceau réfléchi correspondant, la distance de la paroi de la cuve ou de l'interface phase gaz-liquide est déduite.

Ce fonctionnement correspond au fonctionnement d'un lidar usuel.

Ce lidar peut être un lidar mobile produit en série ou un lidar dit « solid state » c'est-à-dire à l'état solide qui émet dans l'ensemble des directions de l'espace grâce à un système photonique de ligne à retard et une lentille adaptée.

L'émission simultanée d'une pluralité de faisceaux permet de réaliser une topographie de la surface réfléchissante visée par l'émetteur 110. Chaque faisceau étant indépendamment et spatialement identifié, en fonction d'un angle d'émission par rapport à un angle de référence par exemple, cela permet d'établir spatialement le positionnement des points de réflexion des faisceaux émis.

Le moyen de détection 145 d'un relief est, par exemple, un circuit électronique de calcul configuré pour associer, à chaque signal électrique produit par le photodétecteur 140, un angle d'émission de faisceau de manière à, par combinaison avec la distance mesurée, déterminer la présence et la hauteur d'un relief.

En fonction de chaque relief détecté, le moyen 146 de détermination produit une topographie de la surface visée par l'émetteur 110, cette surface correspond à, par exemple :
- la surface du liquide présent dans la cuve 115 et/ou
- une paroi de la cuve 115.

Le moyen de détermination 150 de la valeur de chaque paramètre est, par exemple, un circuit électronique de calcul configuré pour déterminer :
- un volume de GNL présent dans la cuve 115,
- une topographie de la surface du liquide présent dans la cuve 115 et/ou
- une propriété mécanique de la cuve 115, ou d'une paroi de ladite cuve, tel une valeur de déformation d'une paroi de la cuve par exemple.

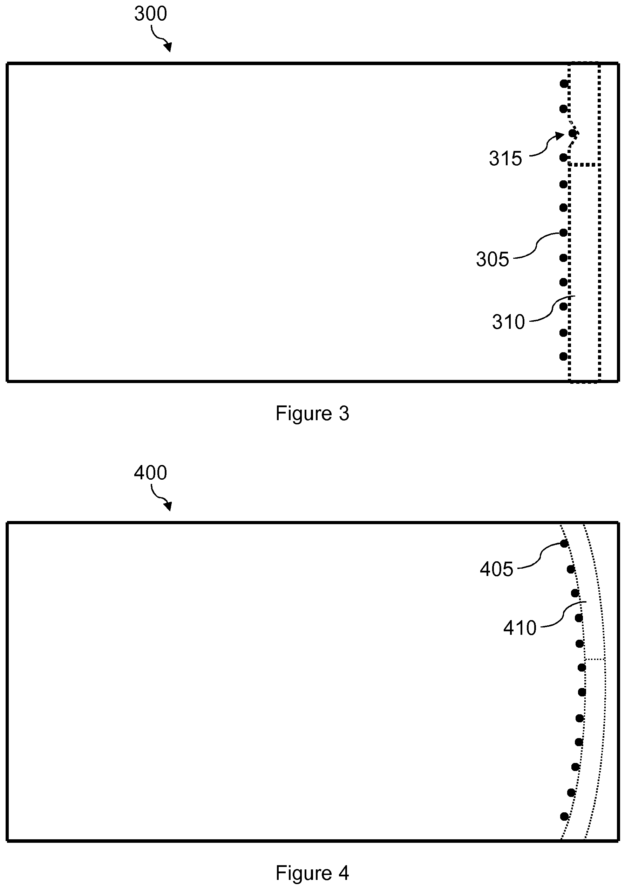

Dans des modes de réalisation préférentiels, le système 100 objet de la présente invention est configuré pour déterminer un paramètre de déformation de la cuve représentatif d'une cavité dans une paroi. Une telle cavité est, par exemple, une fissure. On observe un exemple d'une telle cavité en figure 3.

Cette détermination est réalisée, par exemple, par le moyen de détermination 150.

Dans des modes de réalisation, le système 100 objet de la présente invention est configuré pour déterminer un paramètre de déformation de la cuve représentatif d'une cavité dont la dimension maximale, selon un axe, est inférieure à un mètre.

Dans des modes de réalisation, le système 100 objet de la présente invention est configuré pour déterminer un paramètre de déformation de la cuve représentatif d'une cavité dont la dimension maximale, selon un axe, est inférieure à dix centimètres.

Dans des modes de réalisation, le système 100 objet de la présente invention est configuré pour déterminer un paramètre de déformation de la cuve représentatif d'une cavité dont la dimension maximale, selon un axe, est inférieure à un centimètre.

Dans des modes de réalisation, le système 100 objet de la présente invention comporte :
- un compteur 155 d'un nombre de déformations critiques dans la cuve 115 déterminées par le moyen 150 de détermination, ce compteur étant configuré pour compter la présence d'une déformation critique lorsqu'une valeur de déformation mesurée est supérieure à une valeur limite prédéterminée et
- un émetteur 160 d'alarme lorsqu'un nombre de déformations critiques compté est supérieur à un nombre déterminé.

L'émetteur 160 est, par exemple :
- une antenne configurée pour émettre un signal sans-fil à destination d'un équipement tiers,
- une liaison filaire reliée à un équipement tiers,
- un haut-parleur ou un émetteur de signaux lumineux.

En ce qui concerne le calcul du volume de liquide présent dans la cuve, 115, ce volume peut être déterminé par la mise en fonctionnement du lidar lorsque la cuve est vide de manière à déterminer le volume total de la cuve 115. Une fois la cuve 115 au moins partiellement remplie, l'activation du lidar permet de déterminer la topographie de la surface du liquide présent dans la cuve 115. En fonction du positionnement de cette interface, par rapport à la topographie initiale déterminée, un calcul du volume de liquide peut être réalisé à partir des dimensions déterminées du volume occupé par cette phase liquide.

L'usure des cuves 115 implique notamment la déformation des parois de cette cuve 115 par rapport à un état initial, cette usure étant générée par la dilatation ou par la contraction thermique du matériau formant la paroi ou par la pression hydrostatique générée par la hauteur de liquide dans la cuve 115.

En ce qui concerne le calcul d'une propriété mécanique de la cuve 115, la détermination d'une topographie locale ou globale d'une paroi de la cuve 115 permet de déterminer la présence d'une déformation locale ou globale de cette cuve 115.

Observer ces déformations suppose de présenter une résolution spatiale de la topographie déterminée de l'ordre du centimètre ou moins. D'autres propriétés mécaniques de la paroi, telles que son élasticité de cette paroi, peuvent être déduite de la déformation de la paroi à une échelle plus large, notamment grâce à une résolution spatiale de l'ordre de la dizaine de centimètres. Ces calculs permettent d'informer un utilisateur sur le vieillissement de la paroi.

Dans des variantes, ce calcul peut être réalisé par l'activation périodique du lidar de sorte à déterminer, en fonction de la topographie, la présence d'un état de ballottement dans la cuve 115. Cet état de ballotement est caractérisé par une fréquence des ballottements dans la cuve 115, les champs de pressions ou de vitesses du liquide au niveau de la paroi générés par la vague de liquide dans la cuve.

Dans des variantes, le système 100 comporte un compteur d'un nombre de déformations critiques dans la cuve 115, ce compteur étant configuré pour compter la présence d'une déformation critique lorsqu'une valeur de déformation mesurée en un lieu de la cuve est supérieure à une valeur limite prédéterminée. Lorsque le nombre de déformations critiques est supérieur à une valeur prédéterminée, le compteur émet une alerte.

Dans des variantes, le système 100 comporte un compteur d'une fréquence d'apparition du phénomène de ballottement pendant une durée déterminée. Le compteur est configuré pour émettre une alerte lorsque la fréquence de ballottement dépasse une fréquence déterminée. Cette alerte peut prendre la forme d'une recommandation de pilotage du navire comportant la cuve 115.

Dans des variantes, le système 100 objet de la présente invention comporte un émetteur d'un signal représentatif d'une valeur de déformation déterminée ou d'une alerte lorsqu'une valeur de déformation déterminée est supérieure à une valeur limite prédéterminée.

On observe, en figure 2, une topographie schématique, formée de points 205 acquis par la mise en œuvre du système 100 objet de la présente invention, en deux dimensions de l'interface entre la phase liquide et la phase gazeuse du GNL dans une cuve.

Cette topographie permet d'identifier la présence d'un pic de vague 210 et d'un creux 215 de vague dans cette phase liquide.

Le déplacement de la vague d'un côté à l'autre de la cuve permet de déterminer la présence d'un phénomène de ballottement.

En fonction de la hauteur du pic de vague 210, et de la vitesse de déplacement de ce pic de vague, par comparaison de topographies successivement acquises par exemple, il est possible de déterminer une intensité de choc de la vague contre une paroi de la cuve.

Cette vitesse de déplacement permet également de déterminer une fréquence de ballottement.

On observe, en figure 3, une topographie 300 schématique, formée de points 305 acquis par la mise en œuvre du système 100 objet de la présente invention, en deux dimensions d'une paroi 310 dans une cuve.

Cette topographie permet d'identifier la présence d'une déformation locale 315 dans la paroi 310.

On observe, en figure 4, une topographie 400 schématique, formée de points 405 acquis par la mise en œuvre du système 100 objet de la présente invention, en deux dimensions d'une paroi 410 dans une cuve.

Cette topographie permet d'identifier la présence d'une déformation globale de la paroi 410.

Par « propriété mécanique », on entend l'élasticité d'une paroi de la cuve 115 par exemple.

Le moyen de détection 140 et le moyen de détermination 150 sont positionnés à proximité de la cuve 115 ou de manière déportée à cette cuve 115. Dans des variantes, la liaison entre le photodétecteur 140 et le moyen de détection 140 comporte une partie sans-fil mettant en œuvre des antennes d'émission et de réception de signaux représentatifs des signaux électriques produits par le photodétecteur 140.

Dans des modes de réalisation, le moyen de détection 140 et le moyen de détermination 150 sont situés au niveau d'un circuit électronique de calcul d'un navire transportant la cuve 115. Ce circuit électronique de calcul est, par exemple, une unité centrale dans la salle de commande du navire comportant le système 100.

Dans des variantes, ce circuit électronique de calcul est déporté du navire ou de la cuve.

Dans des modes de réalisation préférentiels, tel que celui représenté en figure 1, au moins :
- l'émetteur 110,
- le récepteur 135 et
- le photodétecteur 140,
sont embarqués dans un boîtier 165 étanche et/ou à masse de remplissage configuré pour limiter les risques d'explosions.

L'utilisation d'une masse de remplissage permet de positionner le boîtier 165 dans une zone ATEX zone 0.

Le boîtier 165 comporte, de plus, une partie transparente pour la lumière émise par l'émetteur 110 et reçue par le récepteur 135.

Les interférences causées par cette partie transparente, pour la gamme de fréquences de la lumière mise en œuvre par l'émetteur 110 et le récepteur 135, doivent être minimisées par sélection d'un type de matériau, d'une épaisseur de matériau et par le positionnement de l'émetteur 110 et du récepteur 135 par rapport à cette partie transparente. Alternativement, ou de manière complémentaire, ces interférences peuvent être corrigées par l'application d'un algorithme de traitement du signal appliqué aux signaux électriques produits par le photodétecteur 140.

Le matériau formant le boîtier 165 est sélectionné pour résister aux contraintes de dilatation thermique propres au stockage de GNL dans une cuve.

Ce boîtier 165 est, par exemple, réalisé en :
- aluminium, avec une fenêtre en borosilicate cimenté,
- acier inoxydable tel que défini par la norme AISI 316L (pour « American Iron and Steel Institute), avec une fenêtre en borosilicate cimenté ou
- acier inoxydable tel que défini par la norme AISI 316L avec une fenêtre en borosilicate fusionnée.

Dans des modes de réalisation préférentiels, tel que celui représenté en figure 1, le système objet de la présente invention comporte :
- un boîtier 165 d'isolation thermique d'au moins :
   - l'émetteur 110,
   - le récepteur 135 et
   - le photodétecteur 140 et
- un moyen 170 de chauffage de l'intérieur du boîtier à une température correspondant à la température minimale de fonctionnement de l'émetteur, du récepteur et du photodétecteur.

Le matériau formant le boîtier 165 est sélectionné pour isoler thermiquement l'intérieur du boîtier 165 aux conditions opératoires de la cuve 115. La température de la phase gazeuse du GNL est de l'ordre de -130°C. Préférentiellement, le matériau sélectionné permet à l'intérieur du boîtier 165 de présenter une température supérieure à -40°C, température de fonctionnement minimale des émetteurs 110, récepteurs 135 et photodétecteurs 140 usuels. Préférentiellement, le matériau sélectionné permet à l'intérieur du boîtier de présenter une température supérieure à 20°C.

Le moyen de chauffage 170 est, par exemple, une résistance chauffante alimentée par un courant électrique.

La puissance ce moyen de chauffage 170 est déterminée en fonction des conditions opératoires de la cuve 115 et du matériau du boîtier 165 sélectionné.

Par exemple, si le boîtier 165 comporte une vitre en plexiglas (marque déposée) de deux centimètres d'épaisseur et de conductivité thermique de 0,19 W/m.K, et que la température intérieure du boîtier 165 doit être de 20°C pour une température de la phase gazeuse du GNL de -130°C, le flux thermique entre l'intérieur et l'extérieur du boîtier 165 est estimé à 10 W environ. Le moyen de chauffage 170 peut donc être configuré pour provoquer un échauffement de l'intérieur du boîtier 165 de 10 W, la transformation par effet Joule de la mise en œuvre du lidar pouvant être soustraite à cet échauffement.

Le boîtier 165 est relié au moyen de détection 145 par un câble électrique, le matériau formant ce câble électrique et le positionnement de ce câble étant sélectionnés pour réduire la perte de chaleur dans la cuve 115.

Le câble électrique est réalisé, par exemple, en polymère chargé en nanotubes ou en graphène. Alternativement, un câble en fer ou en acier peut être employé.

Le poids du boîtier 165 et des éléments à l'intérieur est préférentiellement inférieur à cinq kilogrammes. Le volume de ce boîtier 165 et des éléments à l'intérieur est préférentiellement inférieur à dix litres.

Dans des modes de réalisation préférentiels, tel que celui représenté en figure 1, le système 100 comporte au moins un capteur 175 supplémentaire d'une valeur de paramètre interne ou externe de la cuve, la valeur du paramètre déterminé par le système étant déterminée en fonction d'au moins une valeur de paramètre supplémentaire captée.

Ce capteur 175 est, par exemple, un inclinomètre, une centrale inertielle, un gyroscope, un accéléromètre, un manomètre, un thermomètre. Ce capteur 175 est positionné dans la ou sur la cuve 115 ou sur un navire transportant la cuve 115.

Le système 100 peut également comporter une pluralité de capteurs 175 d'un même type ou de types différents.

On observe également, en figure 1, de manière indépendante, un mode de réalisation particulier du dispositif 120 de détermination de la valeur d'au moins un paramètre d'une cuve 130 de stockage de liquide pour former un système 100 tel que décrit en regard de la figure 1, qui comporte :
- un moyen 125 de fixation à l'intérieur de la cuve, par exemple à un mât positionné à l'intérieur de la cuve et à proximité d'une paroi 130 supérieure de ladite cuve, ledit moyen de fixation supportant :
   - un émetteur 110 laser multidirectionnel,
   - un récepteur 135 de la lumière émise par le laser,
   - un photodétecteur 140 transformant la lumière reçue en signal électrique et
- un moyen 145 de détection d'un relief à l'intérieur de la cuve en fonction de signaux transformés par le photodétecteur,
- un moyen (146) de détermination d'une topographie d'au moins une paroi de la cuve en fonction d'au moins un relief détecté et
- un moyen (150) de détermination de la valeur de chaque paramètre de déformation locale en fonction de la topographie déterminée.

## Revendications

1. Dispositif (120) amovible de détermination de la valeur d'au moins un paramètre de déformation locale d'une cuve de stockage d'un liquide, qui comporte :
- un moyen (125) de fixation à l'intérieur de la cuve, par exemple à un mât positionné à l'intérieur de la cuve et à proximité d'une paroi (130) supérieure de ladite cuve, ledit moyen de fixation supportant :
- un émetteur (110) laser multidirectionnel,
- un récepteur (135) de la lumière émise par le laser,
- un photodétecteur (140) transformant la lumière reçue en signal électrique et
- un moyen (145) de détection d'un relief à l'intérieur de la cuve en fonction de signaux transformés par le photodétecteur,
- un moyen (146) de détermination d'une topographie d'au moins une paroi de la cuve en fonction d'au moins un relief détecté et
- un moyen (150) de détermination de la valeur de chaque paramètre de déformation locale de la cuve
en fonction de la topographie déterminée.

2. Dispositif (120) selon la revendication 1, configuré pour déterminer un paramètre de déformation de la cuve représentatif d'une cavité dans une paroi.

3. Dispositif (120) selon la revendication 2, configuré pour déterminer un paramètre de déformation de la cuve représentatif d'une cavité dont la dimension maximale, selon un axe, est inférieure à un mètre.

4. Dispositif (120) selon la revendication 3, configuré pour déterminer un paramètre de déformation de la cuve représentatif d'une cavité dont la dimension maximale, selon un axe, est inférieure à dix centimètres.

5. Dispositif (120) selon la revendication 4, configuré pour déterminer un paramètre de déformation de la cuve représentatif d'une cavité dont la dimension maximale, selon un axe, est inférieure à un centimètre.

6. Dispositif (120) selon l'une des revendications 1 à 5, dans lequel le moyen (146) de détermination d'une topographie est également configuré pour déterminer la topographie d'une surface du liquide présent dans la cuve, le moyen (150) de détermination déterminant une valeur représentative d'un volume de liquide dans la cuve en fonction de la topographie déterminée.

7. Dispositif (120) selon l'une des revendications 1 à 6, dans lequel au moins :
- l'émetteur (110),
- le récepteur (135) et
- le photodétecteur (140),
sont embarqués dans un boîtier (165) étanche et/ou à masse de remplissage configuré pour limiter les risques d'explosions.

8. Système (100) de détermination de la valeur d'au moins un paramètre de déformation locale d'une cuve de stockage d'un liquide,
**caractérisé en ce qu'**il comporte :
- une cuve (115) de stockage du liquide et
- un dispositif selon l'une des revendications 1 à 7.

9. Système (100) selon la revendication 8, qui comporte :
- un compteur (155) d'un nombre de déformations critiques dans la cuve (115) déterminées par le moyen (150) de détermination, ce compteur étant configuré pour compter la présence d'une déformation critique lorsqu'une valeur de déformation mesurée est supérieure à une valeur limite prédéterminée et
- un émetteur (160) d'alarme lorsqu'un nombre de déformations critiques compté est supérieur à un nombre déterminé.

10. Système (100) selon l'une des revendications 8 ou 9, qui comporte :
- un boîtier (165) d'isolation thermique d'au moins :
- l'émetteur (110),
- le récepteur (135) et
- le photodétecteur (140) et
- un moyen (170) de chauffage de l'intérieur du boîtier à une température correspondant à la température minimale de fonctionnement de l'émetteur, du récepteur et du photodétecteur.

11. Système (100) selon l'une des revendications 8 à 10, qui comporte au moins un capteur (175) supplémentaire d'une valeur de paramètre interne ou externe de la cuve, la valeur du paramètre déterminé par le système étant déterminée en fonction d'au moins une valeur de paramètre supplémentaire captée.

12. Utilisation du dispositif selon l'une des revendications 1 à 7 ou du système selon l'une des revendications 8 à 11, pour déterminer la valeur d'une propriété mécanique de la cuve.

## Patentansprüche

1. Lösbare Vorrichtung (120) zur Bestimmung des Werts mindestens eines lokalen Verformungsparameters eines Speichertanks für eine Flüssigkeit, die Folgendes umfasst:
- ein Befestigungsmittel (125) im Inneren des Speichertanks, z.B. an einem Mast, der im Inneren des Speichertanks und in der Nähe einer oberen Wand (130) des Speichertanks positioniert ist, wobei das genannte Befestigungsmittel Folgendes trägt:
- einen multidirektionalen Lasersender (110),
- einen Empfänger (135) des vom Laser emittierten Lichts,
- einen Photodetektor (140), der das empfangene Licht in ein elektrisches Signal umwandelt und
- ein Mittel (145) zur Erkennung eines Reliefs im Inneren des Speichertanks in Abhängigkeit von vom Photodetektor verarbeiteten Signalen,
- ein Mittel (146) zur Bestimmung einer Topographie mindestens einer Wand des Speichertanks in Abhängigkeit von mindestens einem erkannten Relief und
- ein Mittel (150) zur Bestimmung des Wertes jedes lokalen Verformungsparameters des Speichertanks in Abhängigkeit von der bestimmten Topographie.

2. Vorrichtung (120) nach Anspruch 1, die so konfiguriert ist, dass sie einen Verformungsparameter des Speichertanks bestimmt, der einen Hohlraum in einer Wand darstellt.

3. Vorrichtung (120) nach Anspruch 2, die so konfiguriert ist, dass sie einen Verformungsparameter des Speichertanks bestimmt, der einen Hohlraum darstellt, dessen maximale Abmessung in einer Achse weniger als einen Meter beträgt.

4. Vorrichtung (120) nach Anspruch 3, die so konfiguriert ist, dass sie einen Verformungsparameter des Speichertanks bestimmt, der einen Hohlraum darstellt, dessen maximale Abmessung in einer Achse weniger als zehn Zentimeter beträgt.

5. Vorrichtung (120) nach Anspruch 4, die so konfiguriert ist, dass sie einen Verformungsparameter des Speichertanks bestimmt, der einen Hohlraum darstellt, dessen maximale Abmessung in einer Achse weniger als einen Zentimeter beträgt.

6. Vorrichtung (120) nach einem der Ansprüche 1 bis 5, wobei das Mittel (146) zur Bestimmung einer Topographie auch konfiguriert ist, um die Topographie einer Oberfläche der in dem Speichertank vorhanden Flüssigkeit zu bestimmen, wobei das Mittel (150) zur Bestimmung einen Wert bestimmt, der ein Flüssigkeitsvolumen in dem Speichertank in Abhängigkeit von der bestimmten Topographie darstellt.

7. Vorrichtung (120) nach einem der Ansprüche 1 bis 6, bei der mindestens:
- der Sender (110),
- der Empfänger (135) und
- der Photodetektor (140),
in einem dichten und/oder mit einer Füllmasse versehenen Gehäuse (165) untergebracht sind, das so konfiguriert ist, dass die Explosionsgefahr begrenzt ist.

8. System (100) zur Bestimmung des Werts mindestens eines lokalen Verformungsparameters eines Speichertanks einer Flüssigkeit, **dadurch gekennzeichnet, dass** es Folgendes umfasst:
- einen Speichertank (115) für die Aufbewahrung der Flüssigkeit und
- eine Vorrichtung nach einem der Ansprüche 1 bis 7.

9. System (100) nach Anspruch 8, das Folgendes umfasst:
- einen Zähler (155) einer durch das Bestimmungsmittel (150) bestimmten Anzahl kritischer Verformungen im Speichertank (115), wobei dieser Zähler so konfiguriert ist, dass er das Vorhandensein einer kritischen Verformung zählt, wenn ein gemessener Verformungswert einen vorgegebenen Grenzwert überschreitet, und
- einem Alarmgeber (160), wenn eine gezählte Anzahl kritischer Verformungen größer als eine bestimmte Anzahl ist.

10. System (100) nach einem der Ansprüche 8 oder 9, das Folgendes umfasst:
- ein Wärmedämmgehäuse (165) mit mindestens:
- dem Sender (110),
- dem Empfänger (135) und
- dem Photodetektor (140) und
- ein Mittel (170) zur Erwärmung des Gehäuseinneren auf eine Temperatur, die der minimalen Betriebstemperatur des Senders, Empfängers und des Photodetektors entspricht.

11. System (100) nach einem der Ansprüche 8 bis 10, das mindestens einen zusätzlichen Sensor (175) für einen inneren oder äußeren Parameterwert des Speichertanks aufweist, wobei der vom System bestimmte Parameterwert in Abhängigkeit von mindestens einem zusätzlichen erfassten Parameterwert bestimmt wird.

12. Verwendung der Vorrichtung nach einem der Ansprüche 1 bis 7 oder des Systems nach einem der Ansprüche 8 bis 11 zur Bestimmung des Wertes einer mechanischen Eigenschaft des Speichertanks.

## Claims

1. Removable device (120) for determining the value of at least one local deformation parameter of a liquid storage tank, which device comprises:
- a means (125) for attachment to the inside of the tank, for example to a mast positioned inside the tank and in the vicinity of an upper wall (130) of said tank, said attachment means supporting:
- a multidirectional laser emitter (110);
- a receiver (135) of the light emitted by the laser;
- a photodetector (140) converting the received light into an electric signal; and
- a means (145) for detecting a relief inside the tank as a function of signals converted by the photodetector;
- a means (146) for determining a topography of at least one wall of the tank as a function of at least one detected relief; and
- a means (150) for determining the value of each local deformation parameter as a function of the determined topography.

2. Device (120) according to claim 1, configured to determine a deformation parameter of the tank representative of a cavity in a wall.

3. Device (120) according to claim 2, configured to determine a deformation parameter of the tank representative of a cavity whose maximum dimension, along one axis, is less than one meter.

4. Device (120) according to claim 3, configured to determine a deformation parameter of the tank representative of a cavity whose maximum dimension, along one axis, is less than ten centimeters.

5. Device (120) according to claim 4, configured to determine a deformation parameter of the tank representative of a cavity whose maximum dimension, along one axis, is less than one centimeter.

6. Device (120) according to one of claims 1 to 5, wherein the means (146) for determining a topography is also configured to determine the topography of a surface of liquid in the tank, the determination means (150) determining a value representative of a volume of liquid in the tank as a function of the topography determined.

7. Device (120) according to one of claims 1 to 6, wherein at least:
- the emitter (110);
- the receiver (135); and
- the photodetector (140)
are built into a housing (165) that is sealed and/or has filling material configured to limit the risk of explosions.

8. System (100) for determining the value of at least one local deformation parameter of a liquid storage tank, **characterized in that** it comprises:
- a liquid storage tank (115); and
- a device according to one of claims 1 to 7.

9. System (100) according to claim 8, which comprises:
- a counter (155) of a number of critical deformations in the tank (115) determined by the determination means (150), said counter being configured to count the presence of a critical deformation when a deformation value measured is greater than a predefined limit value; and
- an emitter (160) of a warning when a number of critical deformations counted is greater than a defined number.

10. System (100) according to one of claims 8 to 9, which comprises:
- a thermally insulated housing (165) for at least:
- the emitter (110);
- the receiver (135); and
- the photodetector (140); and
- a means (170) for heating the interior of the housing to a temperature corresponding to the minimum operating temperature of the emitter, receiver and photodetector.

11. System (100) according to one of claims 8 to 10, which comprises at least one additional sensor (175) capturing a value of an internal or external parameter of the tank, the value of the parameter determined by the system being determined as a function of at least one additional parameter value captured.

12. Use of the device according to one of claims 1 to 7, or of the system according to one of claims 8 to 11, for determining the value of a mechanical property of the tank.
